# FASCICULE DE BREVET EUROPEEN

(11) **EP 0 480 851 B1**
(45) Date de publication et mention de la délivrance du brevet: **11.08.1993**
(21) Numéro de dépôt: 91420353.4
(22) Date de dépôt: 08.10.1991
(51) Int. Cl.: B02C 7/12, D21D 1/30

(54) **Plaque à surface antiabrasion, et procédé pour sa réalisation**
Platte mit verschleissfester Fläche und Verfahren zu ihrer Herstellung
Plate with abrasion resistant surface and method of manufacturing same

(30) Priorité: 11.10.1990 FR 9012712
(43) Date de publication de la demande: 15.04.1992
(73) Titulaire: TECHNOGENIA S.A., 74410 Saint-Jorioz (FR)
(72) Inventeur: Brunet, Pierre, F-73250 Saint Pierre d'Albigny (FR); Maybon, Guy, F-74410 Saint Jorioz (FR)
(74) Mandataire: de Beaumont, Michel

(56) Documents cités:
- EP-A- 0 227 879
- AU-D- 54 636
- AU-D- 54 636
- GB-A- 2 168 988
- GB-A- 2 168 988
- US-A- 4 423 845

## Description

La présente invention concerne les plaques de broyage composites comportant une surface de contact destinée à résister à l'abrasion. De telles plaques peuvent être utilisées pour le broyage des poudres céramiques ou le défibrage et le raffinage de la pâte à papier.

Dans les machines de broyage des poudres céramiques et les machines de défibrage ou de raffinage de la pâte à papier, par exemple telles que celles décrites dans les brevets US-A-3 117 603 ou US-A-4 423 845, deux plateaux tournant l'un par rapport à l'autre portent chacun un assemblage de plaques sectorielles disposées en couronne circulaire, les faces travaillantes des plaques étant munies de rainures généralement radiales et étant constituées par une matière abrasive, par exemple par de l'alumine, de l'oxyde de zirconium ou du carbure de silicium.

La face travaillante de la plaque de broyage ou de défibrage est généralement plane. Les rainures constituent la seule irrégularité de surface de la plaque, et leur forme est soigneusement choisie pour obtenir un effet de défibrage de pâte à papier ou de broyage de poudre céramique. La matière insérée entre les plaques doit pouvoir s'écouler dans les rainures radiales, et la forme, l'espacement et la direction des rainures déterminent le calibrage des fibres de pâte à papier ou des grains de poudre céramique que l'on désire obtenir. Ainsi, la plaque doit présenter une grande précision dimensionnelle et de position.

Des recherches ont montré que les machines de broyage munies de plaques telles que décrites dans le document US-A-3 117 603 connaissent des perturbations de fonctionnement lorsque les plaques sont constituées de matières dures antiabrasion. Les perturbations tendent à augmenter avec le temps, en cours de fonctionnement de la machine. On constate, en particulier, une baisse d'efficacité du broyage.

Le document US-A-4 423 845 enseigne de prévoir volontairement des irrégularités de surface, constituées par des plots de matière dure disjoints séparés par des zones de moindre dureté. Lors de la rotation des plaques, il se produit une usure irrégulière par laquelle les plots durs déviennent proéminents, augmentant momentanément l'efficacité du broyage. Mais l'usure se poursuit rapidement et détériore alors l'efficacité du broyage.

On connaît également des machines à meuler telles que décrites par exemple dans les documents EP-A-0 227 879, AU-A-54 636 ou GB-A-2 168 988. Les meules sont constituées de grains de matière dure liés dans une résine polymérisée. Dans une machine à meuler, la surface meulante est plane ou cônique, dépourvue de rainures radiales, et comporte en elle-même des petites aspérités destinées à arracher des petits morceaux de la matière à meuler. Les apérités, constituées par les grains de matière dure, doivent dépasser de la surface générale de la meule, et la surface meulante se régénère généralement par arrachement progressif des aspérités et création d'autres aspérités, par le fait que la surface présente une dureté discontinue créant des zones préférentielles d'usure en résine laissant progressivement dépasser les zones plus dures constituant les aspérités. La surface meulante présente ainsi un pouvoir abrasif.

L'invention résulte de l'observation selon laquelle des garnissages abrasifs utilisés dans les machines de broyage ou de défibrage connues présentent des états de surface irréguliers et subissent une usure inadmissible qui est vraisemblablement due à l'érosion par cavitation. Ainsi, malgré l'utilisation de matières dures, les perturbations de fonctionnement et les baisses d'efficacité de broyage réduisent très sensiblement la longévité et l'intérêt de telles plaques de broyage.

La demanderesse a entrepris des observations minutieuses de surfaces antiabrasion réalisées à base de carbure de tungstène fondu, observations qui ont conduit à constater l'apparition, dans certains cas, d'une usure relativement rapide de telles surfaces malgré l'utilisation de matériaux de rechargement particulièrement durs et susceptibles a priori de s'opposer à l'abrasion.

Ainsi, la demanderesse a constaté que les surfaces antiabrasion à base de carbure de tungstène fondu réalisées par les techniques connues, par exemple par fusion d'un cordon de soudure, présentent des défauts d'homogénéité dans la répartition des constituants durs de la couche antiabrasion. Ces défauts d'homogénéité peuvent exister dès la fabrication de la couche antiabrasion, mais peuvent également apparaître ultérieurement lors de l'utilisation de cette surface.

Pour éviter ces inconvénients, et contrairement à l'enseignement du document US-A-4 423 845, la présente invention propose une nouvelle structure de surface susceptible d'éviter l'apparition de zones d'usure préférentielle, lors de l'utilisation ultérieure de la plaque. Cette nouvelle structure de surface améliore très considérablement les propriétés antiabrasion d'une telle surface, dans des proportions étonnantes, par rapport aux propriétés obtenues par les techniques connues de rechargement dur par dépôt de matière par soudage.

Selon un autre aspect, l'invention propose une telle nouvelle structure de surface antiabrasion qui présente des propriétés très améliorées de non-agressivité vis à vis des agents extérieurs. En particulier, cette nouvelle structure évite la constitution ou l'apparition ultérieure d'un pouvoir abrasif de la surface antiabrasion, contrairement à l'enseignement des documents EP-A-0 227 879, AU-A-54 636 ou GB-A-2 168 988 sur les meules à surface abrasive.

Un autre objet de l'invention est de proposer un nouveau procédé permettant de réaliser la surface de broyage d'une plaque de broyage comportant la nouvelle structure antiabrasion. Un avantage de ce procédé est de réaliser une telle surface de manière relativement simple et peu onéreuse, sans nécessiter une grande dextérité de l'utilisateur. Un autre avantage de ce procédé est de permettre la réalisation de telles surfaces de formes quelconques, pouvant présenter des profils très variés, comportant des creux et des nervures radiales.

Le problème est que les surfaces de broyage de telles plaques de broyeurs sont conformées pour présenter des rainures et des nervures. Dans le cas des broyeurs pour céramique, la réalisation d'une telle plaque est actuellement assurée par les techniques classiques de soudure, et conduit à des opérations manuelles très onéreuses.

Dans le cas des plaques pour la fabrication de la pâte à papier, la précision dimensionnelle requise empêche de recourir aux techniques classiques de soudure. Pour les plaques métalliques, on recourt actuellement aux procédés de fonderie traditionnels, mais ces procédés excluent l'insertion de particules solides de matière dure antiabrasion dans le métal de coulée: une telle coulée produirait des résultats tout à fait insuffisants, et notamment une répartition très inégale et incontrôlée des grains de matière antiabrasion dans la couche antiabrasion. Pour les plaques composites dans lesquelles le liant est une résine polymérisée, on peut recourir aux techniques de moulage. Mais la dureté et la ténacité de la résine sont alors insuffisantes pour obtenir un bon pouvoir antiabrasion.

L'invention permet d'éviter ces difficultés pour la réalisation de plaques de broyage ou de défibrage à surface antiabrasion.

Un avantage important du procédé est qu'il permet d'éviter en général les opérations ultérieures d'usinage, difficiles et onéreuses, et permet de réaliser des pièces présentant une grande précision de dimension.

Pour atteindre ces objets ainsi que d'autres, la présente invention prévoit de réaliser une plaque pour le broyage des poudres céramiques ou le défibrage et le raffinage de la pâte à papier, la plaque comprenant une surface de broyage rainurée à base de matière dure antiabrasion telle que :
- la surface de broyage est constituée par la surface extérieure d'une couche de matériau composite à base de poudre de carbure de tungstène liée dans un alliage de brasure,
- ladite surface extérieure présente un état de surface lisse et régulier de moulage,
- ladite couche contient une répartition désordonnée régulière sensiblement homogène de poudre de carbure de tungstène.

De préférence, la poudre de carbure de tungstène est constituée de grains de carbure de tungstène fondu, la majeure partie des grains ayant une forme sphéroïdale.

Dans le cas des plaques pour le broyage des céramiques ou la fabrication des briques, une augmentation très sensible de la résistance à l'abrasion a été constatée lorsqu'une proportion substantielle des grains présente un diamètre moyen de plus de 0,5 millimètre. Les inventeurs ont pu observer un gain de longévité des plaques de près de 300 % par rapport aux structures à granulométrie faible. On peut avantageusement utiliser des poudres de carbure de tungstène dans lesquelles une partie substantielle des grains ont un diamètre compris entre un et deux millimètres.

En pratique, les grains sont répartis en deux familles principales présentant deux granularités distinctes, à savoir une première famille à granularité élevée, et une seconde famille à granularité faible. Les deux familles sont mélangées de façon homogène pour réaliser, dans la couche de matière dure, une distribution désordonnée compacte de carbure de tungstène.

Les grains de carbure de tungstène présentent avantageusement une composition chimique stable contenant environ 4 % en poids de carbone. La composition chimique stable d'un tel carbure de tungstène évite sa dissolution par l'alliage de brasure lors de la réalisation de la plaque. Le carbure contient de préférence la phase cubique WC 1-X, obtenue par refroidissement rapide. La dureté des grains de carbure de tungstène est supérieure à 3000 Vickers.

Le procédé de réalisation d'une plaque de l'invention comprend la succession des étapes suivantes :
- disposer un moule comprenant des parois de maintien ayant la forme de la surface antiabrasion à réaliser,
- introduire des particules de carbure de tungstène fondu dans l'espace intérieur creux du moule, en vibrant l'ensemble, de sorte que les grains superficiels viennent le plus possible en appui contre les parois du moule et sont jointifs les uns aux autres,
- préparer une quantité suffisante d'un alliage approprié sous forme adaptée pour assurer une répartition ultérieure de l'alliage au cours de sa phase de fusion ultérieure, l'alliage étant un alliage de brasage susceptible de mouiller les grains de carbure de tungstène et de fondre à une température inférieure à la température de fusion du carbure de tungstène et du moule,
- chauffer l'ensemble à une température supérieure à la température de fusion de l'alliage et inférieure à la température de fusion du carbure de tungstène et du moule,
- maintenir cette température pendant une durée suffisante pour assurer l'infiltration de l'alliage en fusion dans l'espace rempli de grains de carbure de tungstène,
- laisser refroidir et démouler.

On peut ainsi réaliser des plaques de broyage ou de défibrage massives en matière antiabrasion.

En alternative, on peut réaliser des plaques de broyage ou de défibrage composites comportant un noyau recouvert de matière antiabrasion. Dans ce cas, avant d'introduire les particules de carbure de tungstène, on dispose au moins un noyau métallique dans le creux du moule en regard des parois de moulage. Le noyau doit avoir une température de fusion inférieure à la température à laquelle on chauffe ultérieurement l'ensemble pour la fusion de l'alliage.

Les considérations sur les effets de paroi conduisent à ajuster la granularité des poudres de carbure de tungstène de telle façon que l'espace entre la paroi du moule et la pièce à recharger ou noyau ait une épaisseur égale à au moins six fois la dimension moyenne des grains de carbure de tungstène, et, dans le cas d'un mélange binaire de deux dimensions, à six fois la dimension des particules de la grosse granularité.

D'autres objets, caractéristiques et avantages de la présente invention ressortiront de la description suivante de modes de réalisation particuliers, faite en relation avec les figures jointes parmi lesquelles :
- la figure 1 représente schématiquement en coupe transversale une plaque revêtue d'une couche superficielle antiabrasion selon la présente invention ;
- la figure 2 représente schématiquement une vue de détail à plus grande échelle de la couche superficielle antiabrasion de la figure 1 ;
- les figures 3 à 7 illustrent les différentes étapes d'un procédé de réalisation d'une couche antiabrasion selon la présente invention, dans un mode de réalisation d'une partie de pièce en forme de plaque ;
- la figure 8 illustre, en vue de côté en coupe, une constitution possible d'une machine de broyage munie de plaques de broyage selon la présente invention ; et
- la figure 9 est une vue de dessus montrant une plaque sectorielle de broyage selon un mode de réalisation de l'invention.

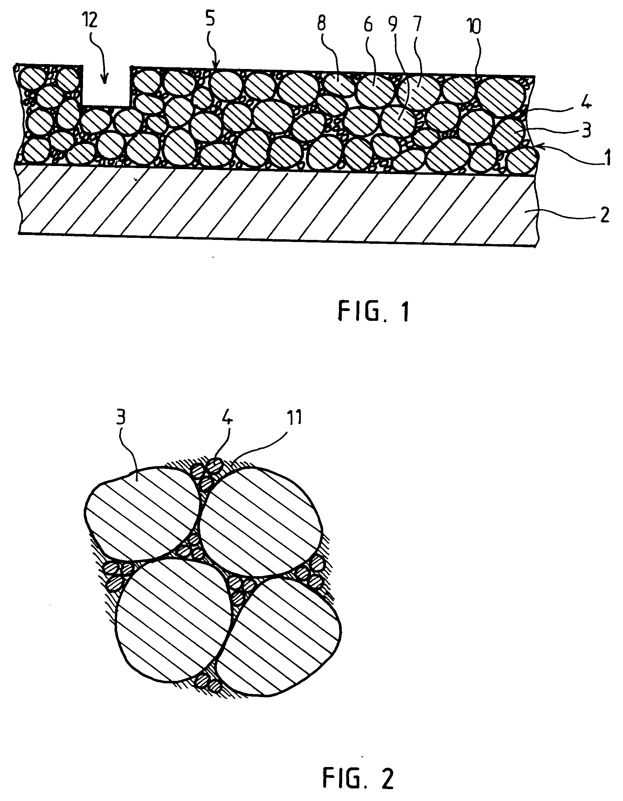

On a représenté sur la figure 1, en coupe transversale, une vue schématique d'une pièce revêtue d'une couche superficielle antiabrasion. Selon l'invention, la couche superficielle 1 antiabrasion est constituée par une couche de matériau composite à base de grains sphéroïdaux de carbure de tungstène fondu, liés dans un alliage à base de nickel. La couche 1 est solidarisée en surface d'un noyau 2 métallique, le noyau 2 étant destiné à assurer le maintien mécanique de la pièce. S'agissant par exemple d'une plaque pour broyeur à plateaux utilisée dans l'industrie de la céramique, ou d'une plaque de défibrage ou d'affinage pour la fabrication de la pâte à papier, le noyau 2 est constitué d'une ébauche en forme de plaque, portant la couche antiabrasion 1.

La couche antiabrasion 1 contient une distribution désordonnée compacte de grains de carbure de tungstène. Dans le mode de réalisation représenté, la poudre de carbure de tungstène comprend une première famille de grains 3, constituée de grains sphéroïdaux de carbure de tungstène fondu dont la granularité est relativement importante, et une seconde famille de grains 4 formée de grains sphéroïdaux de carbure de tungstène fondu dont la granularité est plus faible. De préférence, la granularité de la première famille de grains est telle que les grains ont en moyenne un diamètre environ dix fois supérieur aux grains de la seconde famille de grains 4. On peut par exemple utiliser des grains de première famille 3 dont le diamètre moyen est compris entre 1800 et 2400 microns, et des grains de seconde famille 4 dont le diamètre moyen est compris entre 100 et 400 microns.

On doit s'arranger pour que, dans la couche antiabrasion 1, les grains ou particules de carbure de tungstène soient sensiblement jointifs, principalement au voisinage de la surface 5 qui est destinée à constituer la surface de contact antiabrasion de la pièce. Par exemple, la particule 6 est sensiblement jointive avec les particules adjacentes 7 et 8, et est également jointive avec la particule de couche inférieure 9. Les particules de couche extérieure telles que les particules 6, 7 et 8 sont disposées de telle manière qu'elles soient le plus possible tangentes à la surface externe 5 de la couche de matériau composite 1. Ladite surface externe 5, constituant la surface de contact antiabrasion, forme l'enveloppe de la couche superficielle continue des particules telles que les particules 6, 7 et 8. Les particules telles que la particule 10 de la seconde famille de grains 4 occupent les espaces compris entre les grains de la première famille 3. Les particules de la seconde famille de grains 4 sont également sensiblement jointives les unes par rapport aux autres, et en contact des grains de la première famille 3 de grains.

De préférence, la distribution de particules de carbure de tungstène telles que les particules 6 ou les particules 10 est régulière dans la couche de matériau composite sur une épaisseur au moins égale à six fois le diamètre des particules de première famille de grains 3. On constate que, de cette manière, les propriétés antiabrasion de la surface sont améliorées, probablement par le fait que les contraintes mécaniques entre particules sont mieux réparties par un assemblage des grains plus compact.

Dans la couche antiabrasion 1, les particules de première famille de grains 3 et les particule de seconde famille de grains 4 sont noyées, dans une matrice métallique. Par exemple, la matrice métallique peut être constituée d'un alliage de type maillechort, à base de cuivre, de zinc et de nickel. D'autres alliages de type alliages de brasage peuvent être utilisés, dans la mesure où ils fondent à des températures adéquates et sont susceptibles de mouiller correctement les grains de matière dure telle que le carbure de tungstène fondu sphéroïdal. La matrice métallique peut également être réalisée en un alliage métallique appartenant au groupe des alliage à base de nickel, à base de cuivre ou à base de fer.

La figure 2 représente à plus grande échelle les grains de première famille de poudre 3, les grains de deuxième famille de poudre 4, et l'alliage 11 liant les grains.

On a représenté, à titre d'exemple, sur la figure 1 une surface 5 sensiblement plane comportant une zone accidentée 12, par exemple une rainure ou une cavité. La répartition de surface des grains de poudre doit être assurée sur toute la surface 5.

Il est avantageux que les grains de première famille de poudre 3 et de seconde famille de poudre 4 soient pour la plupart des particules sphéroïdales, obtenues par fusion, dispersion, et refroidissement de gouttelettes de carbure de tungstène. De telles particules sphéroïdales en carbure de tungstène fondu sont par exemple produites par la demanderesse et vendues sous la marque Sphérotène.

Les grains de carbure de tungstène doivent présenter une composition chimique stable contenant environ 4 % en poids de carbone, et contenir la phase cubique WC 1-X, obtenue par refroidissement rapide. Ainsi, lors de la réalisation de la plaque, la surface extérieure des grains de carbure n'est pas dissoute ou altérée par l'alliage 11 liant les grains. La dureté des grains est supérieure à 3000 Vickers, et reste supérieure à cette valeur dans la plaque réalisée.

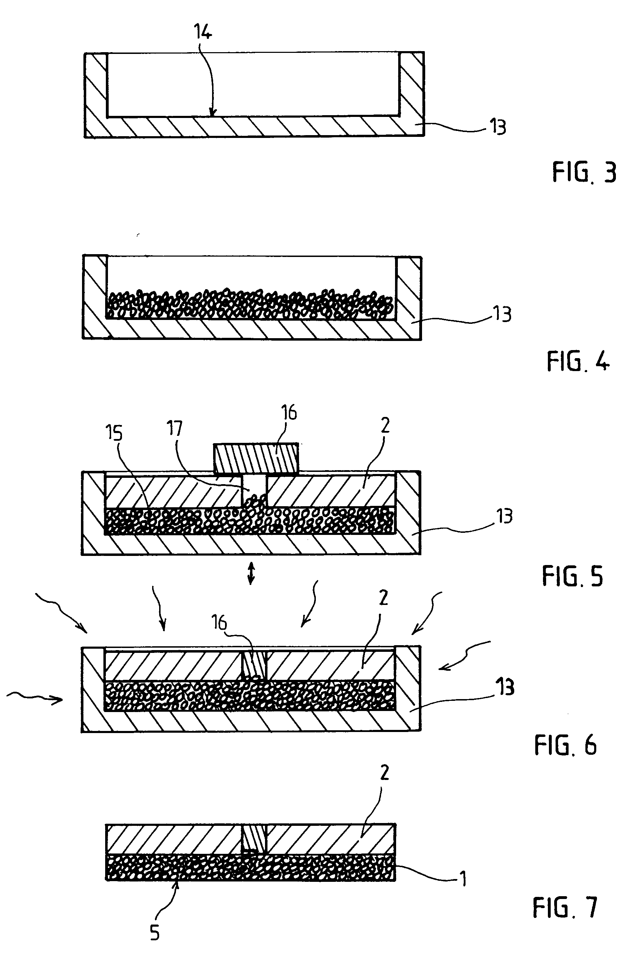

Un procédé de réalisation d'une surface antiabrasion selon la présente invention est illustré sur les figures 3 à 7. Ce procédé, appelé infiltration, est une sorte de moulage particulier, ou de surmoulage sur une pièce métallique formant le noyau 2. Dans le mode de réalisation illustré, le procédé comprend les étapes principales suivantes :
a) on dispose un moule 13 creux comprenant des parois de maintien ayant la forme de la surface antiabrasion à réaliser ; par exemple, le fond 14 du moule est conformé comme devra l'être la surface antiabrasion ;
b) on dispose le noyau 2 en regard des parois de maintien du moule, et on remplit de grains sphéroïdaux de carbure de tungstène fondu l'espace 15 compris entre le noyau 2 et le moule 13 ; dans le cas d'un moule 13 en creux formant récipient, comme le représentent les figures, on peut disposer tout d'abord les grains de carbure de tungstène dans le fond du moule, puis poser le noyau 2 en appui sur la couche de grains ; on vibre de préférence l'ensemble, pour tasser les grains, de sorte que les grains superficiels viennent le plus possible en appui contre la paroi 14 du moule et sont jointifs les uns aux autres ;
c) on prépare une quantité suffisante d'un alliage 16 approprié, sous forme solide adaptée, en ménageant des moyens assurant la répartition ultérieure de l'alliage au cours de sa phase de fusion ultérieure ; par exemple, on pose un bloc d'alliage 16 sur le noyau 2, et on ménage un canal 17 traversant le noyau et par lequel peut s'écouler l'alliage 16 pour pénétrer dans l'espace 15 contenant les grains de carbure de tungstène ; l'alliage est un alliage de brasage susceptible de mouiller les grains de carbure de tungstène et le noyau 2, et de fondre à une température inférieure à la température de fusion du noyau 2 et du moule 13 ;
d) on chauffe l'ensemble pièce - moule - brasure, par un procédé adapté, jusqu'à obtenir la fusion de l'alliage de brasage et son infiltration à travers les grains de carbure, et son soudage au noyau 2 devant être rechargé ; l'ensemble est pour cela chauffé à une température supérieure à la température de fusion de l'alliage et inférieure à la température de fusion du noyau 2 et du moule 13 ;
e) on laisse refroidir, et on démoule comme le représente la figure 7.

On obtient alors une plaque comprenant le noyau 2 et la couche antiabrasion 1.

Le même procédé peut être utilisé en l'absence d'un noyau 2.

Dans certains cas, on peut être amené à utiliser une étape préalable pour préparer la surface du noyau 2, pour permettre un bon soudage de la brasure. Cette étape préalable consiste à réaliser les opérations suivantes :
- meulage ou grenaillage de la surface de noyau 2,
- métallisation par un voile d'alliage de type nickel / chrome / bore / silicium connu sous la dénomination d'alliage "auto-fusible" ; cette métallisation est réalisée à l'aide d'un chalumeau oxyacétylénique équipé d'un dispositif d'alimentation de poudre, ou d'un chalumeau de métallisation à poudre classique.

La poudre en grains sphériques de carbure de tungstène fondu que l'on utilise pour réaliser la surface antiabrasion peut avantageusement être constituée d'un mélange préhomogénéisé de deux familles de poudres à granularités différentes, comme cela a été décrit en relation avec les figures 1 et 2.

Dans les cas où l'on veut obtenir une surface de contact 5 particulièrement résistante, on peut avantageusement utiliser une étape ultérieure d'élimination, par rectification ou polissage, de la zone superficielle de la couche 1 de matériau antiabrasion. Un enlèvement de matière sur une profondeur d'environ d/2, d étant le diamètre moyen des grains de la famille de gros grains de carbure de tungstène, élimine sensiblement la zone des grains perturbée par l'effet de paroi.

La surface de broyage selon l'invention doit présenter un état de surface lisse et régulier, comme l'état de surface obtenu par un moulage.

La demanderesse a constaté que la réalisation des plaques de broyage comprenant une surface antiabrasion selon l'invention procure une efficacité nettement améliorée, non seulement pour ce qui concerne les qualités antiabrasion de la plaque, mais également pour ce qui concerne l'efficacité du broyage lui-même. Il résulte de la géométrie régulière des nervures que les particules à broyer s'écoulent normalement dans les canaux de passage, sans se trouver perturbées par les irrégularités que l'on trouve dans les plaques dont la couche antiabrasion a été réalisée manuellement par soudure ou a été irrégulièrement usée. Il en résulte également que les particules à broyer se trouvent broyées en un seul passage entre les plaques de broyage, alors qu'un broyage correct réalisé par les techniques connues nécessite habituellement deux ou plusieurs passages.

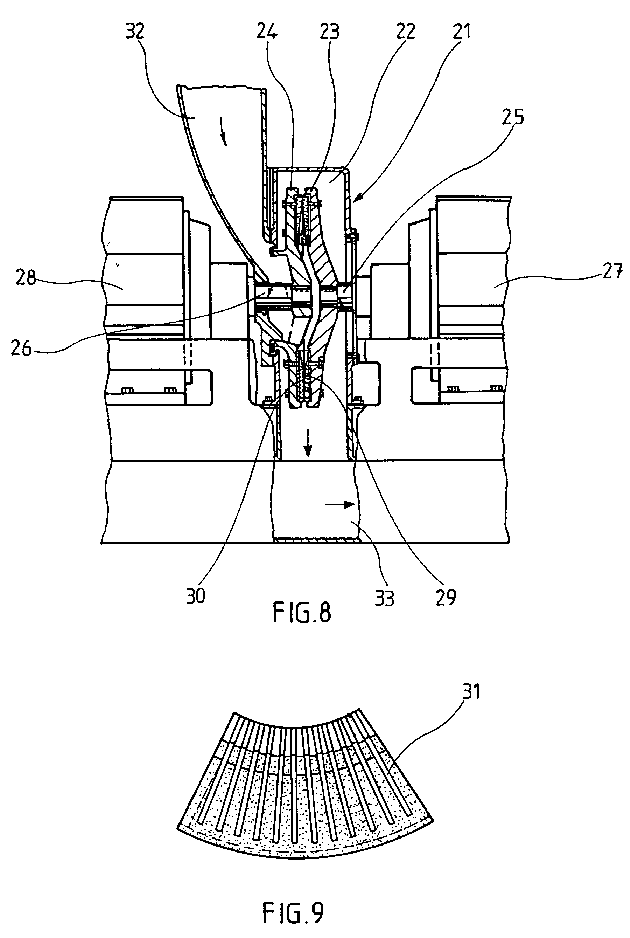

A titre d'exemple, on a représenté sur la figure 8 une structure possible de machine de broyage ou de raffinage utilisant les plaques antiabrasion selon l'invention. La machine comprend un corps 21 creux dont l'espace intérieur 22 contient deux plateaux 23 et 24 montés rotatifs sur des arbres coaxiaux horizontaux respectifs 25 et 26. Un moteur électrique 27 entraîne en rotation l'arbre 25, et un moteur électrique 28 entraîne en rotation l'arbre 26, dans des sens opposés.

Les plateaux 23 et 24 sont disposés selon un faible écartement l'un par rapport à l'autre, et comportent deux surfaces respectives 29 et 30 orientées l'une contre l'autre, en forme de couronne. Les surfaces 29 et 30 sont formées par des plaques de broyage rapportées et fixées sur le corps de plateau 23 ou 24. Les plaques de broyage sont réalisées conformément au procédé décrit plus haut, et peuvent par exemple avoir la forme représentée en vue de dessus sur la figure 9. Ces deux vues de dessus représentent la surface antiabrasion de la plaque, surface constituée par les grains de carbure de tungstène liés par un alliage métallique. On distingue, sur la surface antiabrasion, des rainures généralement radiales 31.

Le fonctionnement de la machine de la figure 8 permet, par rotation des plateaux 23 et 24, de broyer de la matière pénétrant dans l'espace intérieur 22 par un conduit d'entrée 32, et ressortant après broyage par un conduit de sortie 33.

La présente invention n'est pas limitée aux modes de réalisation qui ont été explicitement décrits mais elle en inclut les diverses variantes et généralisations contenues dans le domaine des revendications ci-après.

## Revendications

1. Plaque de broyage pour le broyage des poudres céramiques ou le défibrage et le raffinage de la pâte à papier, comprenant une surface de broyage (1) rainurée à base de matière dure antiabrasion, caractérisée en ce que :
- la surface de broyage (1) est constituée par la surface extérieure (5) d'une couche de matériau composite (1) à base de poudre de carbure de tungstène (3, 4) liée dans un alliage de brasure (11),
- ladite surface extérieure (5) présente un état de surface lisse et régulier de moulage,
- ladite couche (1) contient une répartition désordonnée compacte, régulière et sensiblement homogène de grains de carbure de tungstène (3, 4).

2. Plaque selon la revendication 1, caractérisée en ce que la poudre de carbure de tungstène est constituée de grains de carbure de tungstène fondu, la majeure partie des grains ayant une forme sphéroïdale.

3. Plaque selon la revendication 2, caractérisée en ce qu'une partie substantielle des grains de carbure de tungstène présente un diamètre supérieur à 0,5 mm.

4. Plaque selon l'une quelconque des revendications 1 à 3 caractérisée en ce que les grains sont répartis en deux familles principales présentant deux granularités distinctes, une première famille (3) à granularité élevée, une seconde famille (4) à granularité faible, les deux familles (3, 4) étant mélangées de façon homogène pour réaliser, dans la couche de matière dure (1), une distribution désordonnée compacte de carbure de tungstène.

5. Plaque selon l'une quelconque des revendications 1 à 4, caractérisée en ce que les grains de carbure de tungstène présentent une composition chimique stable contenant environ 4 % en poids de carbone, et la phase cubique WC 1-X obtenue par refroidissement rapide et non détruite ou dissoute lors de la réalisation de la plaque, la dureté des grains étant supérieure à 3000 Vickers.

6. Machine de broyage, caractérisée en ce qu'elle comprend au moins une plaque de broyage selon l'une quelconque des revendications 1 à 5.

7. Procédé de réalisation d'une plaque de broyage, pour le broyage des poudres céramiques ou le défibrage et le raffinage de la pâte à papier, ladite plaque comprenant une surface de broyage rainurée à base de matière dure antiabrasion selon la revendication 1, caractérisé en ce qu'il comprend les étapes suivantes :
a) disposer un moule (13) creux comprenant des parois de maintien ayant la forme de la surface (5) antiabrasion à réaliser,
b) introduire des particules de carbure de tungstène fondu dans l'espace intérieur creux du moule (13), en vibrant l'ensemble, de sorte que les particules superficielles viennent au maximum en appui contre les parois du moule et sont jointives les unes aux autres,
c) préparer une quantité suffisante d'un alliage approprié (16) sous forme adaptée pour assurer une répartition ultérieure de l'alliage au cours de sa phase de fusion ultérieure, l'alliage étant un alliage de brasage susceptible de mouiller les particules de carbure de tungstène et de fondre à une température inférieure à la température de fusion du carbure de tungstène et du moule (13),
d) chauffer l'ensemble à une température supérieure à la température de fusion de l'alliage et inférieure à la température de fusion du carbure de tungstène et du moule (13),
e) maintenir cette température pendant une durée suffisante pour assurer l'infiltration de l'alliage en fusion dans l'espace rempli de particules de matière dure,
f) laisser refroidir et démouler.

8. Procédé selon la revendication 7, caractérisé en ce que, avant d'introduire les particules de carbure de tungstène, on dispose au moins un noyau (2) métallique dans le creux du moule en regard des parois de moulage du moule (13), ledit noyau (2) ayant une température de fusion supérieure à la température à laquelle on chauffe ultérieurement l'ensemble pour la fusion de l'alliage.

9. Procédé selon l'une des revendications 7 ou 8, caractérisé en ce qu'il comprend une étape ultérieure d'élimination, par rectification ou polissage superficiel, de la zone d'empilement des grains perturbée par effet de paroi, l'épaisseur à éliminer étant sensiblement égale à la moitié du diamètre des grains de carbure de tungstène les plus gros contenus dans la couche antiabrasion.

## Patentansprüche

1. Zerkleinerungsplatte zum Zerkleinern von keramischen Pulvern oder für das Holzzerfasern und das Raffinieren von Papiermasse, mit einer gerillten Zerkleinerungsoberfläche (1) aus einem harten verschleißfesten Material, dadurch gekennzeichnet, daß
- die Zerkleinerungsoberfläche (1) durch die Außenfläche (5) einer Schicht eines Mischmaterials (1) auf der Basis von Wolframkarbidpulver (3, 4), gebunden in einer Hartlotlegierung (11), gebildet ist,
- diese Außenfläche (5) einen glatten und regelmäßigen Abguß-Oberflächenzustand aufweist,
- diese Schicht (1) eine kompakte, regelmäßige und im wesentlichen homogene, ungeordnete Verteilung von Wolframkarbidkörpern (3, 4) enthält.

2. Platte nach Anspruch 1, dadurch gekennzeichnet, daß das Wolframkarbidpulver aus geschmolzenen Wolframkarbidkörnern besteht, wobei die Mehrheit der Körner eine Kugelform hat.

3. Platte nach Anspruch 2, dadurch gekennzeichnet, daß ein wesentlicher Anteil der Wolframkarbidkörner einen Durchmesser von mehr als 0.5 mm aufweist.

4. Platte nach einem der Ansprüche 1 bis 3, dadurch gekennzeichnet, daß die Körner in zwei Hauptfamilien aufgeteilt sind, die zwei unterschiedliche Körnigkeiten aufweisen, eine erste Familie (3) mit einer vermehrten Körnigkeit, eine zweite Familie (4) mit einer schwachen Körnigkeit, wobei die beiden Familien (3, 4) in einer homogenen Art und Weise vermischt sind, um in der harten Materialschicht (1) eine ungeordnete kompakte Verteilung des Wolframkarbids zu realisieren.

5. Platte nach einem der Ansprüche 1 bis 4, dadurch gekennzeichnet, daß die Wolframkarbidkörner eine stabile chemische Zusammensetzung aufweisen, die etwa 4 Gew.-% Kohlenstoff enthält, und die kubische Phase WC 1-X erhalten ist durch ein rasches Kühlen und anläßlich der Realisierung der Platte nicht zerstört oder aufgelöst ist, wobei die Härte der Körner mehr als 3000 Vickers ist.

6. Zerkleinerungsmaschine, dadurch gekennzeichnet, daß sie wenigstens eine Zerkleinerungsplatte nach einem der Ansprüche 1 bis 5 aufweist.

7. Verfahren zur Herstellung einer Zerkleinerungsplatte zum Zerkleinern von keramischen Pulvern oder für das Holzzerfasern und das Raffinieren von Papiermasse, wobei die Platte eine gerillte Zerkleinerungsoberfläche aus einem harten verschleißfesten Material nach Anspruch 1 aufweist, dadurch gekennzeichnet, daß es die folgenden Stufen umfaßt:
a) das Anordnen einer hohlen Form (13), die Haltewände aufweist, welche die Form der zu realisierenden verschleißfesten Oberfläche (5) haben,
b) die Einleitung von geschmolzenen Wolframkarbidteilchen in den hohlen Innenraum der Form (13), wobei die Anordnung derart vibriert wird, daß die Oberflächenteilchen maximal in Berührung mit den Wänden der Form kommen und zueinander fugendicht sind,
c) die Vorbereitung einer ausreichenden Menge einer geeigneten Legierung (16) in der angepaßten Form, um eine spätere Verteilung der Legierung im Verlauf ihrer späteren Schmelzphase zu sichern, wobei die Legierung eine Hartlotlegierung ist, welche die Wolframkarbidteilchen anfeuchten kann und bei einer Temperatur niedriger als die Schmelztemperatur des Wolframkarbids und der Form (13) schmelzen kann,
d) das Erwärmen der Anordnung auf eine Temperatur höher als die Schmelztemperatur der Legierung und niedriger als die Schmelztemperatur des Wolframkarbids und der Form (13),
e) das Beibehalten dieser Temperatur während einer Dauer, die ausreicht, um die Infiltration der geschmolzenen Legierung in den Raum zu sichern, der mit den harten Materialteilchen aufgefüllt ist,
f) das Zulassen einer Abkühlung und das Entformen.

8. Verfahren nach Anspruch 7, dadurch gekennzeichnet, daß vor der Einleitung der Wolframkarbidteilchen wenigstens ein metallischer Kern (2) in dem Hohlraum der Form in Bezug auf die Abgußwände der Form (13) angeordnet wird, wobei dieser Kern (2) eine Schmelztemperatur höher als die Temperatur hat, auf welche später die Anordnung für das Schmelzen der Legierung erwärmt wird.

9. Verfahren nach einem der Ansprüche 7 oder 8, dadurch gekennzeichnet, daß es eine spätere Stufe der Eliminierung, durch eine Begradigung oder Oberflächenpolierung, des durch die Wirkung einer Wand gestörten Bereichs einer Schichtung der Körner umfaßt, wobei die zu eliminierende Dicke im wesentlichen gleich der Hälfte des Durchmessers der größten Wolframkarbidkörner ist, die in der verschleißfesten Schicht enthalten sind.

## Claims

1. A grinding plate for grinding ceramic powders or for the defibration and refining of paper pulp, comprising a grooved grinding surface (1) based on a hard abrasion-proof material, characterized in that:
- grinding surface (1) is composed of external surface (5) of a layer of composite material (1) based on tungsten carbide powder (3, 4) bonded in a soldering alloy (11),
- said external surface (5) has a smooth and even mould finish,
- said layer (1) contains a regular and essentially uniform compact random distribution of tungsten carbide grains (3, 4).

2. A plate as claimed in claim 1, characterized in that the tungsten carbide powder consists of grains of melted tungsten carbide, the majority of the grains having a spheroidal shape.

3. A plate as claimed in claim 2, characterized in that a significant proportion of the tungsten carbide grains has a diameter of more than 0.5 mm.

4. A plate as claimed in any of claims 1 to 3, characterized in that the grains belong to two main families with two different grain sizes, a first family (3) with a large grain size, and a second family (4) with a small grain size, the two families (3, 4) being mixed uniformly in order to give a compact random distribution of tungsten carbide in layer of hard material (1).

5. A plate as claimed in any of claims 1 to 4, characterized in that the tungsten carbide grains have a stable chemical composition containing roughly 4% carbon by weight and the cubic phase WC 1-X obtained by fast cooling and not destroyed or dissolved during the manufacture of the plate, with the grain hardness being higher than 3000 Vickers.

6. A grinding machine, characterized in that it includes at least one grinding plate as claimed in any of claims 1 to 5.

7. A process for producing a grinding plate for grinding ceramic powders or the defibration and refining of paper pulp, said plate comprising a grooved grinding surface based on a hard abrasion-proof material as claimed in claim 1, characterized in that it includes the following stages:
a) a cavity mould (13) is prepared which has mould support walls having the same shape as abrasion-proof surface (5) to be produced,
b) particles of melted tungsten carbide are introduced into mould cavity (13) and the assembly is vibrated so that the surface particles come into as close as possible contact with the walls of the mould and are contiguous with each other,
c) a sufficient quantity of an appropriate alloy (16) is prepared in a suitable form to ensure subsequent distribution of the alloy during its later melting phase, the alloy being a soldering alloy capable of wetting the particles of tungsten carbide and melting at a temperature which is less than the melting point of the tungsten carbide and mould (13),
d) the assembly is heated to a temperature which exceeds the melting point of the alloy but is less than the melting point of the tungsten carbide and mould (13),
e) this temperature is maintained for a sufficient time to ensure infiltration of the molten alloy into the space filled with particles of hard material,
f) it is allowed to cool and the mould is stripped.

8. A process as claimed in claim 7, characterized in that, before introducing the tungsten carbide particles, at least one metal core (2) is placed inside the mould opposite the mould walls of mould (13), said core (2) having a melting point which is higher than the temperature to which the assembly is subsequently heated in order to melt the alloy.

9. A process as claimed in claim 7 or 8, characterized in that it involves a subsequent elimination stage, by surface treatment or polishing, of the zone in which grains are disturbed by the wall effect, the depth to be removed being essentially equal to half the diameter of the largest tungsten carbide grains contained in the abrasion-proof layer.
